# EUROPÄISCHE PATENTSCHRIFT

(11) **EP 4 026 400 B1**
(45) Veröffentlichungstag und Bekanntmachung des Hinweises auf die Patenterteilung: **26.11.2025**
(21) Anmeldenummer: 20761804.2
(22) Anmeldetag: 25.08.2020
(51) Int. Cl.: H05B 6/10, H05B 3/36, B29C 35/08

(54) **WERKZEUGVORRICHTUNG MIT EINER HEIZMATTE SOWIE REPARATURVERFAHREN UND HERSTELLVERFAHREN FÜR WERKSTÜCKE AUS KUNSTSTOFFMATERIAL**
TOOL DEVICE HAVING A HEATING MAT, REPAIR METHOD AND MANUFACTURING METHOD FOR WORKPIECES MADE OF PLASTIC MATERIAL
DISPOSITIF D'OUTIL COMPRENANT UN TAPIS CHAUFFANT, PROCÉDÉ DE RÉPARATION ET PROCÉDÉ DE FABRICATION DE PIÈCES EN MATIÈRE PLASTIQUE

(30) Priorität: 06.09.2019 DE 102019123950
(43) Veröffentlichungstag der Anmeldung: 13.07.2022
(73) Patentinhaber: Deutsches Zentrum für Luft- und Raumfahrt e.V., 51147 Köln (DE)
(72) Erfinder: SCHNEIDER, Marvin, 71083 Herrenberg (DE); KADEN, Markus, 70372 Stuttgart (DE)
(74) Vertreter: RPK Patentanwälte Reinhardt und Kaufmann Partnerschaft mbB
(86) Internationale Anmeldenummer: PCT/EP2020/073735
(87) Internationale Veröffentlichungsnummer: WO 2021/043633

(56) Entgegenhaltungen:
- DE-A1- 102016 209 487
- US-A1- 2004 089 655
- US-A1- 2008 128 078
- US-A1- 2012 018 089

## Beschreibung

### Stand der Technik

Die Erfindung betrifft eine Werkzeugvorrichtung mit einer Heizmatte mit einem Heizelement, welches zur Erwärmung eines Objekts, insbesondere einem Laminat und/oder einem Reparaturstück für ein Werkstück aus einem Kunststoffmaterial vorgesehen ist. Weiter betrifft die Erfindung ein Reparaturverfahren für ein Werkstück aus einem Kunststoffmaterial und ein Herstellverfahren für ein Objekt aus einem Kunststoffmaterial, sowie die Verwendung der Werkzeugvorrichtung für das Reparaturverfahren oder das Herstellverfahren.

Heizmatten werden beispielsweise zum Tempern und Beheizen von Reparaturstellen von Faserverbundwerkstoffen oder während der Herstellung von Faserverbund-Strukturen oder Composite-Bauteilen, im Folgenden auch Laminate genannt, verwendet. Die Heizmatten bestehen üblicherweise aus einem Heizdraht, eingebettet in Trägermaterialien wie beispielsweise Silikon.

Aus der DE 10 2017 116 931 A1 ist eine Reparaturvorrichtung bekannt, mit einer Reparaturmatte und mindestens einem Heizelement, welches an der Reparaturmatte angeordnet ist. In der Reparaturmatte ist dabei eine Mehrzahl von wärmeleitfähigen Partikeln vorgesehen, welche in die Reparaturmatte integriert sind.

Dabei sind die Partikel innerhalb eines Strukturmaterials der Reparaturmatte beabstandet zueinander angeordnet. Die Reparaturmatte ist biegeflexibel ausgebildet. Das Heizelement ist beispielsweise an einer Seite des Strukturmaterials der Reparaturmatte angeordnet. Das mindestens eine Heizelement steht insbesondere mit der Reparaturmatte in thermischem und/oder mechanischem Kontakt.

Die DE 10 2016 115 284 A1 beschreibt eine Reparaturvorrichtung an einem Werkstück aus einem Kunststoffmaterial, umfassend eine Induktionsheizvorrichtung, welche an dem Werkstück angeordnet ist, und ein Reparaturmaterial, welches an einem Reparaturbereich des Werkstücks angeordnet ist. Dabei umfasst die Induktionsheizvorrichtung eine Magnetfelderzeugungseinrichtung und eine Wärmequelle. Die Wärmequelle ist zwischen der Magnetfelderzeugungseinrichtung und dem Reparaturbereich angeordnet. Die Reparaturvorrichtung weist mindestens einen Temperatursensor auf, durch welchen eine Wärmebeaufschlagung des Reparaturmaterials durch die Wärmequelle charakterisiert wird. Der mindestens eine Temperatursensor ist signalwirksam mit einer Steuer- und/oder Regeleinrichtung verbunden. Die Steuer- und/oder Regeleinrichtung weist eine Speichereinrichtung auf, in der eine Temperaturverlaufsvorgabe gespeichert ist. Die Steuer- und/oder Regeleinrichtung steuert und/oder regelt die durch den mindestens einen Temperatursensor gemessene Temperatur gemäß der gespeicherten Temperaturverlaufsvorgabe.

Die DE 69636952 T2 offenbart ein flexibles isoliertes Heizelement, das zum Erwärmen um Rohre oder andere ungewöhnlich geformte Komponenten umgelegt wird. Das Heizelement umfasst eine relativ dünne und elastische, nicht dehnbare Heizmatte, die entweder eine zweidimensionale Krümmung, wie sie z.B. Rohre oder andere Rohrleitungen aufweisen, oder dreidimensionale Krümmungen, wie sie z.B. Sphären, Sättel, Ventilkörper, Ellbogenfittings oder T-Fittings besitzen, aufweist.

Die DE 10243448 B4 offenbart ein flexibles Heizelement, wie eine Wärmedecke, Wärmekissen oder Wärmeunterbett, mit einer in dem Heizelement verlegten Heizkordel, die über einen außerhalb des Heizelements herausgeführten Heizkordelabschnitt und einen elektrischen Beschaltungsteil mit einer elektrischen Zuleitung verbunden ist und mit ihrem anderen Ende ihrer Heizdrähte in dem Heizelement endet. Der herausgeführte Heizkordelabschnitt ist mit einer auf der äußeren Isolation der Heizkordel aufgebrachten wärmeisolierenden, flexiblen Umhüllung versehen, die in ihrem Übergangsbereich zu dem Heizelement und/oder in ihrem weiteren Übergangsbereich zu dem Beschaltungsteil mit einem Knickschutz- oder Zugentlastungsteil versehen ist.

Die WO 99/60823 A1 offenbart ein elektrisches Heizelement mit einer als elektrische Widerstandsheizung ausgebildeten Heizschicht, wobei die Heizschicht aus elektrisch leitenden nichtmetallischen Fasern gebildet ist, die in eine aus Kunststoff hergestellte Schicht eingebettet sind. Die elektrisch leitenden nichtmetallischen Fasern sind als Vlies ausgebildet. Das elektrische Heizelement ist bei der Verwendung Epoxidharz oder Polyesterharz zur Herstellung der Kunststoffschicht mehr oder weniger steif und rigide und kann entsprechend einer gewünschten dreidimensionalen Form ausgebildet sein, während es bei der Verwendung von Silikonharz zur Herstellung der Kunststoffschicht flexibel und verformbar bleibt.

Das elektrische Heizelement mit einer aus Silikonharz gebildeten Kunststoffschicht findet Anwendung als Heizung für Autositze, Liegen, Betten, für Heizdecken und Wärmedecken, sowie allgemein für Bekleidung.

Die DE 202008011596 U1 offenbart ein Heizelement mit einem Verbundaufbau, mit einem außenliegenden leitenden Bereich mit einer innenliegenden ersten Isolierung und einem darin eingebetteten Heizleiter und einer innenliegenden zweiten Isolierung. Der leitende Bereich umgibt die erste Isolierung und die zweite Isolierung entlang eines leitenden Pfades vollständig, wobei der leitende Bereich einen Auslösestrom zur Auslösung einer Sensorfunktion leitet. Die geometrische Form des Aufbaus des Heizelementes kann gegebenenfalls je nach Anwendung unterschiedlich ausgeführt sein, beispielsweise als eine Heizfläche, wie z.B. als ein flächiges Band, eine flächige Matte o.ä., beispielsweise flexible Heizmatten zur Vulkanisierung im Reifenbereich oder flexible Heizbänder als Rohrbegleitheizungen.

Die DE 60132943 T2 offenbart ein Heizkissen mit einer Mischung aus einer homogenen Paste aus einem thermisch leitfähigen Partikelfeststoff und einer Flüssigmetalllegierung in einem fließfähigen Kunstharzmaterial. Die Oberflächen des thermisch leitfähigen Partikelfeststoffs werden mit der flüssigen Metalllegierung benetzt, wobei die Flüssigmetalllegierung die einzelnen Partikel einkapselt, die den thermisch leitfähigen Partikelfeststoff bilden.

Die US 2021/018089 A1 offenbart eine Werkzeugvorrichtung mit einer induktiven Heizvorrichtung, bei der ein zu erhitzendes oder aufzuschmelzendes Bauteil zwischen einer Heizmatte und einem starren Träger angeordnet ist. Auf dem starren Träger ist ein metallischer Suszeptor platziert. Der Suszeptor kann eine auf dem festen Träger angeordnete thermische Isolierschicht überdecken, die einen Wärmeverlust beim Erhitzen des Bauteils verhindert. Die thermische Isolierung kann aus Keramik sein.

Die WO 2014/168688 offenbart ein Induktionsheizungssystem mit einem Induktionsheizelement. Das System umfasst auch eine Leistungsversorgung, die ausgebildet ist, einen Strom an das Induktionsheizelement zum Heizen eines Werkstücks bereitzustellen. Weiter umfasst das System einen Temperaturfühler, der ausgebildet ist, ein Signal zu liefern, das der Leistungsversorgung eine Temperatur des Werkstücks anzeigt. Das Induktionsheizungssystem ist dazu ausgebildet, den Temperaturfühler in Kontakt mit dem Werkstück zu halten. Das Induktionsheizelement ist in einem Schlauch angeordnet, an welchem auch der Temperaturfühler angeordnet ist.

### Offenbarung der Erfindung

Die Aufgabe der Erfindung ist es, eine Werkzeugvorrichtung mit einer Heizmatte zu schaffen, welche es erlaubt, ein Objekt, insbesondere ein Laminat und/oder ein Reparaturstück, auf effiziente Weise zu erwärmen.

Eine weitere Aufgabe ist es, ein Reparaturverfahren für ein Werkstück aus einem Kunststoffmaterial mittels einer solchen Werkzeugvorrichtung zu schaffen.

Eine weitere Aufgabe ist es, ein Herstellverfahren für ein Objekt, insbesondere ein Laminat und/oder ein Reparaturstück aus einem Kunststoffmaterial mittels einer solchen Werkzeugvorrichtung zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Erfindung betrifft eine Werkzeugvorrichtung, insbesondere eine portable Werkzeugvorrichtung, umfassend wenigstens eine flexible Heizmatte, welche wenigstens ein induktives Heizelement mit wenigstens einem Kühlelement, das wenigstens eine Kühlleitung aufweist, umfasst, welches zur Erwärmung eines Objekts, insbesondere eines Laminats und/oder eines Reparaturstücks vorgesehen ist.

Die wenigstens eine Kühlleitung weist wenigstens einen flexiblen Schlauch auf. Die wenigstens eine Kühlleitung des Kühlelements ist wenigstens bereichsweise jeweils in Zwischenräumen zwischen Heizdrähten des Heizelements angeordnet.

Erfindungsgemäß sind zwischen dem zu erwärmenden Objekt und der Heizmatte ein Isolierelement, das eine Dicke von wenigstens 5 mm aufweist, und ein wärmeerzeugendes Element an einer dem Heizelement benachbarten Seite der Heizmatte angeordnet und ein wärmeerzeugendes Element auf einer der Heizmatte abgewandten Seite des Objekts angeordnet, wobei das Isolierelement flächig an der Heizmatte anliegt und mit dem Strukturmaterial der Heizmatte stoffschlüssig und/oder einstückig verbunden ist, wobei die wärmeerzeugenden Elemente durch das Heizelement induktiv erwärmt werden und das Objekt über die wärmeerzeugenden Elemente erwärmt wird.

Die erfindungsgemäße Werkzeugvorrichtung kann vorteilhaft beispielsweise zum Tempern und Beheizen von Reparaturstellen von Faserverbundwerkstoffen oder während der Herstellung von Faserverbund-Strukturen oder Composite-Bauteilen, wie Laminaten verwendet werden.

Insbesondere kann die Werkzeugvorrichtung zur lokalen Reparatur von Bauteilen aus Faserverbundwerkstoffen eingesetzt werden, bei denen nur schadhafte Stellen behandelt werden, ohne dass das ganze Bauteil behandelt werden muss.

Die Heizmatte weist wenigstens ein Heizelement auf, welches beispielsweise Heizdrähte einer Widerstandsheizung oder spulenartig angeordnete Drähte einer induktiven Heizung umfassen kann.

Die Heizmatte selbst kann beispielsweise aus einer flexiblen Silikonmatte bestehen, welche sich der Form des Werkstücks anpassen kann.

Mit den Drähten der induktiven Heizung kann dann weiter ein elektrisch leitfähiges, beispielsweise metallisches, wärmeerzeugendes Element, welches in der Nähe des zu erwärmenden Objekts angeordnet ist, aufgeheizt werden. Das Heizelement selbst kann in ein Trägermaterial der Heizmatte, beispielsweise Silikon, eingebettet sein. Optional kann das Objekt bei ausreichender elektrischer Leitfähigkeit auch unmittelbar induktiv erwärmt werden. Optional können elektrisch leitfähige Partikel als induktiv erwärmbares Suszeptormaterial in dem Trägermaterial der Heizmatte enthalten sein, und/oder es können elektrisch leitfähige Partikel als induktiv erwärmbares Suszeptormaterial in einer Folie als elektrisch leitfähiges wärmeerzeugendes Element vorgesehen sein.

Die Heizdrähte einer Widerstandsheizung wie auch das wärmeerzeugende Element einer induktiven Heizung können hohe Temperaturen unmittelbar an oder in der Heizmatte bewirken, welche das Material der Heizmatte oder auch ein unmittelbar in der Umgebung angeordnetes Werkstück oder Werkzeug beschädigen könnten.

Mittels des in oder an der Heizmatte angeordneten Kühlelements kann die Temperatur an oder in der Heizmatte insbesondere bei induktiver Erwärmung so wirksam abgesenkt werden, dass das Risiko einer Beschädigung der Heizmatte und/oder eines unmittelbar in der Umgebung angeordneten Werkstücks oder Werkzeugs reduziert wird. Bei der Widerstandserwärmung kann mit Hilfe der Kühlung die Abkühlrate nach einem erfolgreichen Aufheizen günstig erhöht werden.

Eine Anordnung der wenigstens einen Kühlleitung zwischen den Heizdrähten kann eine besonders effektive Art der Kühlung der Heizmatte bewirken, da die in den Heizdrähten auf Grund des elektrischen Widerstands entstehende Wärme, am Ort der Entstehung abgeführt werden kann. Diese Art der Kühlung ist besonders für eine induktive Heizung wirksam, wo die nutzbare Wärme ja im wärmeerzeugenden Element und nicht in der Heizmatte entstehen soll.

Faserverbund-Strukturen oder Composite-Bauteile, wie Laminate, können Hochleistungsthermoplaste umfassen, die bei relativ hohen Temperaturen verarbeitbar sind. So wird beispielsweise Polyetheretherketon (PEEK) bei 400°C, Polyphenylensulfid (PPS) und Polyetherimide (PEI) bei größer 300°C verarbeitet, Kunststoffe wie Polyamide (PA) bei 220°C-280°C. Heizmatten, die beispielsweise aus Silikon bestehen sowie die Lackisolierung von lackierten Heizdrähten halten jedoch nur Temperaturen bis 200°C stand.

Durch die erfindungsgemäße Kühlung der Heizmatte kann eine Degradation des Trägermaterials der Heizmatte sowie des Lacks von lackisolierten Heizdrähten verringert und damit die Lebensdauer der Heizmatte signifikant verlängert werden. Dadurch kann eine induktive Spule in der Heizmatte mit höherer elektrischer Leistung betrieben werden, um die für die Verarbeitung von Laminaten und Reparaturstücken bei Faserverbundbauteilen erforderlichen Temperaturen zu erreichen.

Auf diese Weise ist es möglich, mobile Reparaturen von Faserverbundbauteilen mit Laminaten vorzusehen, die sonst üblicherweise nur in Autoklaven oder Öfen verarbeitet werden können, was Reparaturprozesse kostengünstiger gestalten lässt oder überhaupt erst ermöglicht.

Durch die aktive Kühlung der Heizmatte in einem geregelten Kühlprozess können in großen Werkzeugen Bauteile aus Laminaten günstig hergestellt und verarbeitet werden.

Heizmatten, welche auf Grund der aktiven Kühlung aus üblichem Silikon mit üblichen lackisolierten Heizdrähten hergestellt sein können, ermöglichen dadurch kostengünstige Herstellprozesse von Laminaten.

Nach einer günstigen Ausgestaltung der Werkzeugvorrichtung kann die wenigstens eine Kühlleitung wenigstens bereichsweise über der Heizmatte und/oder wenigstens bereichsweise direkt mit der Heizmatte verbunden und/oder wenigstens bereichsweise in die Heizmatte integriert angeordnet sein. So können flexible Schläuche mit Kanälen vorgesehen sein, durch die ein Kühlmedium transportiert werden kann. Beispielsweise kann durch die Kanäle Luft als Kühlmedium strömen.

Alternativ ist auch eine Flüssigkühlung, beispielsweise mit Wasser, möglich. Über die Vorlauftemperatur des Kühlmediums kann der Grad der Kühlung eingestellt werden.

Nach einer vorteilhaften Ausgestaltung der Werkzeugvorrichtung kann zur Erwärmung des Objekts wenigstens ein wärmeerzeugendes Element, insbesondere ein elektrisch leitfähiges Material, vorgesehen sein, welches an einer dem Heizelement benachbarten Seite der Heizmatte angeordnet ist.

Mit den Drähten des in der Heizmatte angeordneten Heizelements einer induktiven Heizung kann dann weiter ein metallisches wärmeerzeugendes Element, welches in der Nähe des zu erwärmenden Objekts aus Kunststoffmaterial angeordnet ist, aufgeheizt werden. Dadurch kann am Ort des Objekts Wärme auf geeignete Weise in das Objekt eingekoppelt werden, sodass das Objekt mittels eines Werkzeugs umgeformt werden kann oder an ein vorhandenes Werkstück angefügt und mit diesem verbunden werden kann.

Das elektrisch leitfähige Material kann in einer Ausgestaltung beispielsweise eine Metallfolie oder ein Metallblech sein.

Optional ist es möglich, das Objekt selbst bei ausreichender elektrischer Leitfähigkeit unmittelbar induktiv zu erwärmen.

Nach einer vorteilhaften Ausgestaltung der Werkzeugvorrichtung kann das Kühlelement in einem von dem zu erwärmenden Objekt abgewandten Bereich der Heizmatte angeordnet sein. Auf diese Weise kann die erzeugte Wärme günstig in das Objekt eingekoppelt werden, um das Objekt umzuformen oder zu fügen. Gleichzeitig kann die Heizmatte von der Rückseite her mit dem Kühlelement wirksam gekühlt werden, sodass das Material der Heizmatte sich nicht übermäßig aufheizen kann.

Nach einer vorteilhaften Ausgestaltung der Werkzeugvorrichtung können Heizdrähte des Heizelements und die wenigstens eine Kühlleitung des Kühlelements wenigstens bereichsweise nebeneinander in einer flächigen Ausdehnung der Heizmatte angeordnet sein. Heizdrähte und Kühlleitungen können auch in Gruppen jeweils nebeneinander in der Heizmatte angeordnet sein. Auch durch eine solche Anordnung ist eine wirksame Abfuhr der nicht in das Objekt eingekoppelten Wärme in der Heizmatte möglich.

Nach einer vorteilhaften Ausgestaltung der Werkzeugvorrichtung kann die wenigstens eine Kühlleitung in einem Herstellungsprozess, insbesondere einem Gießprozess, der Heizmatte integriert hergestellt sein.

Besonders günstig lässt sich die wenigstens eine Kühlleitung in eine Heizmatte integrieren, wenn die Heizmatte in einem Gießprozess, wie es beispielsweise bei Silikon möglich ist, hergestellt wird. Mittels der integrierten Kühlkanäle lässt sich die entstehende Wärme besonders wirksam abführen.

Nach einer vorteilhaften Ausgestaltung der Werkzeugvorrichtung können eine oder mehrere Kühlleitungen auf einer dem Heizelement abgewandten Oberfläche der Heizmatte befestigt, insbesondere aufgeklebt oder aufgenäht sein. Flexible Schläuche mit Kanälen lassen sich auf diese Weise einfach und in einem nachgeordneten Prozess der Herstellung der Heizmatte anbringen. Dadurch können günstig vorkonfektionierte Kühlschläuche verwendet werden, was den Herstellungsprozess kostengünstig macht.

Nach einer vorteilhaften Ausgestaltung der Werkzeugvorrichtung können die Heizdrähte und die wenigstens eine Kühlleitung integriert ausgebildet sein. Beispielsweise ist auch möglich, die Heizdrähte mit der wenigstens einen Kühlleitung zusammenzufügen und als einen Leitungsverbund in die Heizmatte zu integrieren. Dadurch lässt sich die entstehende Wärme direkt am Ort der Entstehung im Heizdraht besonders wirksam abführen.

Nach einer vorteilhaften Ausgestaltung der Werkzeugvorrichtung kann das Heizelement als Induktionsheizung ausgebildet sein. Mit den Drähten des in der Heizmatte angeordneten Heizelements einer induktiven Heizung kann dann weiter ein metallisches wärmeerzeugendes Element, welches in der Nähe des zu erwärmenden Objekts aus Kunststoffmaterial angeordnet ist, aufgeheizt werden. Dadurch kann am Ort des Objekts Wärme auf geeignete Weise in das Objekt eingekoppelt werden, sodass das Objekt mittels eines Werkzeugs umgeformt werden kann oder an ein vorhandenes Werkstück angefügt und mit diesem verbunden werden kann.

Nach einer vorteilhaften Ausgestaltung der Werkzeugvorrichtung kann das wärmeerzeugende Element als Metallfolie oder Metallblech ausgebildet sein. Ein solches wärmeerzeugendes Element kann platzsparend in der Nähe des Objekts angeordnet werden, beispielsweise aufgelegt oder dicht angefügt werden. Dadurch kann die durch die Induktion entstehende Wärme besonders günstig in das zu erwärmende Objekt eingekoppelt werden.

Ein solches Isolierelement kann eine wirksame thermische Dämmung bewirken, um die im wärmeerzeugenden Element entstehende Wärme von der Heizmatte fernzuhalten und diese vor einer möglicherweise schädigenden Erwärmung zu schützen. Das Isolierelement kann beispielsweise aus kostengünstiger Steinwolle bestehen. Typische Dicken der Dämmung können beispielsweise 5 mm betragen. Generell sind Materialien mit einer geringen Wärmeleitung, z.B. mit einer Wärmeleitfähigkeit von 0,02 - 0,2 W/mK sowie mit einer hohen Temperaturstabilität im Bereich von 250°C bis 500°C günstig.

Nach einer vorteilhaften Ausgestaltung der Werkzeugvorrichtung kann das Isolierelement aus einem Material mit geringer Wärmeleitfähigkeit, insbesondere mit einer Wärmeleitfähigkeit im Bereich von 0,02 bis 0,2 W/mK, insbesondere aus einem Silikonmaterial, gebildet sein. Mit einem solchen Dämmmaterial lässt sich eine wirksame thermische Dämmung bewirken, um die im wärmeerzeugenden Element entstehende Wärme von der Heizmatte fernzuhalten und diese vor einer möglicherweise schädigenden Erwärmung zu schützen. Optional ist eine Dämmung aus Glaswolle, Mineralwolle oder Isolierwolle vorteilhaft.

Generell sind Materialien mit einer geringen Wärmeleitung, z.B. mit einer Wärmeleitfähigkeit von 0,02 bis 0,2 W/mK sowie mit einer hohen Temperaturstabilität im Bereich von 250°C bis 500°C günstig.

Nach einer vorteilhaften Ausgestaltung der Werkzeugvorrichtung kann das Heizelement von einem Strukturmaterial der Heizmatte und/oder des Isolierelements umgeben sein. Das Heizelement mit seinen Heizdrähten kann dafür beispielsweise in einem Gießprozess in das Heizmattenmaterial und/oder das Isoliermaterial eingegossen werden. Auf diese Weise ist eine besonders günstige Herstellung der Heizmatte möglich.

Nach einer vorteilhaften Ausgestaltung der Werkzeugvorrichtung kann die Werkzeugvorrichtung einen Vakuumkanal aufweisen, mit dem die Werkzeugvorrichtung auf einem Werkstück fixierbar ist. Insbesondere kann der Vakuumkanal umlaufend an einem Außenrand des Heizelements ausgebildet sein. Die Werkzeugvorrichtung kann auf das Werkstück aufgelegt und anschließend der Vakuumkanal evakuiert werden. Dadurch saugt sich die flexible Werkzeugvorrichtung, welche beispielsweise aus einer Silikon-Heizmatte bestehen kann, an das Werkstück an und passt sich der Form des Werkstücks an. Dadurch kann der effektive Abstand zwischen Werkzeugvorrichtung und Werkstück minimiert werden, wodurch die Wärme besonders effektiv in das Werkstück eingekoppelt werden kann.

Nach einer vorteilhaften Ausgestaltung der Werkzeugvorrichtung kann die Werkzeugvorrichtung einen geschlossenen Kühlkreislauf von einem Auslass des Kühlelements über einen Wärmetauscher zu einem Einlass des Kühlelements aufweisen. Über Schläuche kann beispielsweise dem Kühlelement Kaltluft zugeführt und Warmluft abgeführt werden. In einem Kreislauf wird die warme Luft über den Wärmetauscher wieder abgekühlt und kann wieder in die Schläuche eingebracht werden, sodass die kalte Luft wieder dem Kühlelement zugeführt werden kann. Mittels einer solchen autonomen Werkzeuganordnung können Reparaturen an einem Werkstück vor Ort durchgeführt werden.

Die Werkzeugvorrichtung ist dadurch unabhängig von einer eventuell nicht vorhandenen Versorgung mit einem Kühlmedium. Dadurch wird die Flexibilität einer solchen Werkzeugvorrichtung entscheidend erhöht.

Nach einem weiteren Aspekt der Erfindung wird ein Reparaturverfahren für ein Werkstück aus einem Kunststoffmaterial vorgeschlagen, wobei eine Werkzeugvorrichtung, umfassend wenigstens eine flexible Heizmatte, welche wenigstens ein induktives Heizelement umfasst, mit dem ein Objekt, insbesondere ein Laminat und/oder ein Reparaturstück, erwärmt wird, an einem Reparaturbereich des Werkstücks positioniert wird. Dabei wird zwischen Reparaturbereich und Werkzeugvorrichtung das Reparaturstück positioniert. Während des Erwärmens des Objekts wird die Heizmatte wenigstens zeitweise aktiv gekühlt. Zwischen dem zu erwärmenden Objekt und der Heizmatte wird ein Isolierelement, das eine Dicke von wenigstens 5 mm aufweist, und ein wärmeerzeugendes Element an einer dem Heizelement benachbarten Seite der Heizmatte angeordnet. Ein wärmeerzeugendes Element wird auf einer der Heizmatte abgewandten Seite des Objekts angeordnet, wobei das Isolierelement flächig an der Heizmatte angelegt wird und mit dem Strukturmaterial der Heizmatte stoffschlüssig und/oder einstückig verbunden wird, wobei die wärmeerzeugenden Elemente durch das Heizelement induktiv erwärmt werden und das Objekt über die wärmeerzeugenden Elemente erwärmt wird.

Das Objekt, das beispielsweise ein Laminat und/oder ein Reparaturstück sein kann, kann an oder in einen zu reparierenden Bereich des Werkstücks positioniert werden.

Dann wird die Werkzeugvorrichtung an dem Reparaturbereich angeordnet und mit dem Heizelement das Reparaturstück erwärmt, sodass es sich der Form des Reparaturbereichs, beispielsweise einer Vertiefung im Material des Werkstücks auf Grund eines Beschädigung, anpassen kann und mit dem Material des Werkstücks gefügt werden kann. Dabei kann die Heizmatte aktiv mit dem Kühlelement gekühlt werden, sodass die Temperatur der Heizmatte selbst in einem für das Material der Heizmatte unkritischen Bereich gehalten werden kann. Dadurch kann die Lebensdauer der Heizmatte günstig verlängert werden.

Nach einem weiteren Aspekt der Erfindung wird ein Herstellverfahren für ein Objekt aus einem Kunststoffmaterial vorgeschlagen, wobei eine Werkzeugvorrichtung, umfassend wenigstens eine flexible Heizmatte, welche wenigstens ein induktives Heizelement umfasst, mit dem ein Objekt, insbesondere ein Laminat und/oder ein Reparaturstück, erwärmt wird, an einem Werkzeug positioniert wird. Dabei wird zwischen Werkzeug und Werkzeugvorrichtung das Objekt positioniert. Während des Erwärmens des Objekts wird die Heizmatte wenigstens zeitweise aktiv gekühlt. Zwischen dem zu erwärmenden Objekt und der Heizmatte wird ein Isolierelement, das eine Dicke von wenigstens 5 mm aufweist, und ein wärmeerzeugendes Element an einer dem Heizelement benachbarten Seite der Heizmatte angeordnet. Ein wärmeerzeugendes Element wird auf einer der Heizmatte abgewandten Seite des Objekts angeordnet, wobei das Isolierelement flächig an der Heizmatte angelegt wird und mit dem Strukturmaterial der Heizmatte stoffschlüssig und/oder einstückig verbunden wird, wobei die wärmeerzeugenden Elemente durch das Heizelement induktiv erwärmt werden und das Objekt über die wärmeerzeugenden Elemente erwärmt wird.

Das Objekt, das beispielsweise ein Laminat und/oder ein Reparaturstück sein kann, kann an oder in dem Werkzeug positioniert werden. Dann wird die Werkzeugvorrichtung an dem Objekt angeordnet und das Objekt mit dem Heizelement erwärmt, sodass es sich der Form des Werkzeugs anpassen kann. Vorteilhaft kann sich das Objekt beispielsweise einer Krümmung des Werkzeugs anpassen. Auf diese Weise kann beispielsweise ein besonders geformtes Werkstück hergestellt werden. Auf diese Weise kann beispielsweise ein Faserverbundwerkstück durch Aufheizen des Epoxidharzes gebildet werden.

Während Wärmebehandlung kann die Heizmatte wenigstens zeitweise aktiv mit dem Kühlelement gekühlt werden, sodass die Temperatur der Heizmatte selbst in einem für das Material der Heizmatte unkritischen Bereich gehalten werden kann. Dadurch kann die Lebensdauer der Heizmatte günstig verlängert werden.

Vorteilhaft kann ein Bauteil mit einer gekrümmten Oberfläche hergestellt werden, oder es kann ein Bauteil lokal an einer Schadstelle mit einem Reparaturstück repariert werden, ohne das gesamte Bauteil behandeln zu müssen.

Nach einer vorteilhaften Ausgestaltung des Verfahrens kann zwischen dem Objekt und der Heizmatte ein Isolierelement und/oder ein wärmeerzeugendes Element angeordnet werden, wobei das wärmeerzeugende Element durch das Heizelement induktiv erwärmt wird und das Objekt über das wärmeerzeugende Element erwärmt wird. Das Isolierelement kann die Heizmatte vor der entstehenden Wärme durch effektive Dämmung schützen. Das wärmeerzeugende Element kann durch induktive Erwärmung das Objekt wirksam auf die gewünschte Temperatur für einen Umformprozess und/oder Fügeprozess bei einem Reparaturverfahren oder einem Herstellverfahren bringen.

Nach einer vorteilhaften Ausgestaltung des Verfahrens kann ein Isolierelement zwischen Heizmatte und wärmeerzeugendem Element und/oder zwischen Heizmatte und einem zu erwärmenden Objekt angeordnet sein, wobei das Isolierelement flächig an der Heizmatte anliegt. Das Isolierelement kann die Heizmatte vor der entstehenden Wärme durch effektive Dämmung schützen.

Nach einer vorteilhaften Ausgestaltung des Verfahrens kann ein wärmeerzeugendes Element auf einer der Heizmatte abgewandten Seite des Objekts angeordnet werden, wobei das wärmeerzeugende Element durch das Heizelement induktiv erwärmt wird und das Objekt über das wärmeerzeugende Element erwärmt wird. Das wärmeerzeugende Element, beispielsweise ein Metallblech, kann so beispielsweise direkt auf einem Werkzeug angeordnet werden und das umzuformende oder zu fügende Objekt auf das wärmeerzeugende Element aufgelegt werden. Das Objekt kann sich so bei der Erwärmung der Form des wärmeerzeugenden Elements anpassen. Auf diese Weise kann über die Form des wärmeerzeugenden Elements die Form des umgeformten Objekts bestimmt werden.

Nach einer vorteilhaften Ausgestaltung des Verfahrens kann dabei das wärmeerzeugende Element wenigstens bereichsweise an der Oberfläche des Werkzeugs als metallische Schicht, insbesondere eine Metallfolie oder ein Metallblech ausgebildet sein, und/oder das wärmeerzeugende Element wenigstens bereichsweise auf die Oberfläche des Werkzeugs mittels eines Beschichtungsverfahrens, insbesondere mittels Galvanisierung, aufgebracht werden. Das Objekt, welches auf das wärmeerzeugende Element aufgelegt wird, kann sich so der Form der Oberfläche des darunterliegenden Werkzeugs anpassen und die Form annehmen. Auf diese Weise kann das Objekt auf geeignete Weise umgeformt werden. Auch ist so ein kompakter Aufbau eines Werkzeugs eines Herstellverfahrens mit integriertem wärmeerzeugendem Element möglich.

Nach einer vorteilhaften Ausgestaltung des Verfahrens kann eine Kühlung der Heizmatte über eine geregelte Kühlfunktion, insbesondere als variothermer Prozess, erfolgen.

Auf diese Weise lässt sich ein Reparaturprozess oder ein Herstellprozess eines Faserverbundwerkstücks geeignet steuern. Dadurch lassen sich beispielsweise gewünschte Aufheizrampen oder Abkühlrampen, welche für den Reparaturprozess oder Herstellprozess eines bestimmten Materials von Bedeutung sein können, auf geeignete Weise darstellen.

Nach einem weiteren Aspekt der Erfindung wird eine Verwendung einer vorstehend beschriebenen Werkzeugvorrichtung für ein vorstehend beschriebenes Reparaturverfahren für ein Werkstück aus einem Kunststoffmaterial vorgeschlagen. Mit Hilfe der Werkzeugvorrichtung kann das beschriebene Reparaturverfahren besonders günstig durchgeführt werden.

Nach einem weiteren Aspekt der Erfindung wird eine Verwendung einer vorstehend beschriebenen Werkzeugvorrichtung für ein vorstehend beschriebenes Herstellverfahren für ein Objekt aus einem Kunststoffmaterial vorgeschlagen. Mit Hilfe der Werkzeugvorrichtung kann das beschriebene Herstellverfahren besonders günstig durchgeführt werden.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Querschnitt durch eine Werkzeugvorrichtung an einem an einem Werkzeug angelegten Objekt nach einem Ausführungsbeispiel der Erfindung;
- Fig. 2: einen Querschnitt durch eine Werkzeugvorrichtung an einem in einem Reparaturbereich eines Werkstücks angeordneten Reparaturstück nach einem weiteren Ausführungsbeispiel der Erfindung;
- Fig. 3: einen Querschnitt durch eine Werkzeugvorrichtung mit einem Vakuumkanal an einem in einem Reparaturbereich eines Werkstücks angeordneten Reparaturstück nach einem weiteren Ausführungsbeispiel der Erfindung;
- Fig. 4: einen Querschnitt durch eine Werkzeugvorrichtung mit einem Isolierelement an einem an einem Werkzeug angelegten Objekt nach einem weiteren Ausführungsbeispiel der Erfindung;
- Fig. 5: einen Querschnitt durch eine Werkzeugvorrichtung mit einem Isolierelement und einem zusätzlichen wärmeerzeugenden Element an einem an einem Werkzeug angelegten Objekt nach einem weiteren Ausführungsbeispiel der Erfindung;
- Fig. 6: einen Querschnitt durch eine Werkzeugvorrichtung mit auf einer Oberfläche angebrachten Kühlleitungen an einem in einem Reparaturbereich eines Werkstücks angeordneten Reparaturstück nach einem weiteren Ausführungsbeispiel der Erfindung; und
- Fig. 7: eine schematische Darstellung einer Werkzeugvorrichtung mit einem geschlossenen Kühlkreislauf nach einem weiteren Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

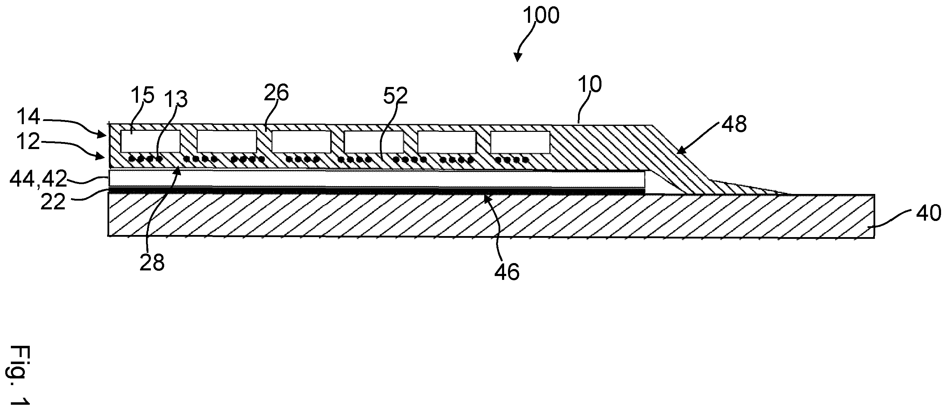

Figur 1 zeigt einen Querschnitt durch eine Werkzeugvorrichtung 100 an einem an einem Werkzeug 40 angelegten Objekt 44 nach einem Ausführungsbeispiel der Erfindung.

Die Werkzeugvorrichtung 100 umfasst eine flexible Heizmatte 10, welche ein Heizelement 12 aufweist, welches zur Erwärmung des Objekts 44, einem Laminat 42 vorgesehen ist. Das Heizelement 12 ist in Form von Heizdrähten 13 in die Heizmatte 10 eingebettet. Das Heizelement 12 ist so von dem Strukturmaterial der Heizmatte 10 umgeben.

Die Heizmatte 10 weist weiter ein Kühlelement 14 auf, welches in Form von in die Heizmatte 10 eingebetteten Kühlleitungen 15 ausgebildet ist. Die Kühlleitungen 15 sind in einem Herstellungsprozess, insbesondere einem Gießprozess der Heizmatte 10, welche beispielsweise aus Silikon besteht, integriert hergestellt.

Die Kühlleitungen 15 sind von einem Kühlmedium, beispielsweise Luft, durchströmt. Alternativ ist auch eine Flüssigkühlung, beispielsweise mit Wasser, möglich.

Die Kühlkanäle sind in einem von dem zu erwärmenden Objekt 44 abgewandten Bereich 26 der Heizmatte 10 angeordnet. Dadurch kann die in der Heizmatte entstehende Wärme wirksam abgeführt werden, während aber eine Abfuhr von Wärme von dem aufzuheizenden Objekt 44 vermieden wird.

Die Kühlleitungen 15 des Kühlelements 14 können außerdem wenigstens bereichsweise jeweils in Zwischenräumen 52 zwischen Heizdrähten 13 des Heizelements 12 angeordnet sein, um eine möglichst effektive Kühlung am Entstehungsort der Wärme in den Heizdrähten 13 zu ermöglichen. Heizdrähte 13 des Heizelements 12 und Kühlleitungen 15 des Kühlelements 14 können so auch wenigstens bereichsweise nebeneinander in einer flächigen Ausdehnung der Heizmatte 10 angeordnet sein. Die Heizdrähte 13 und die Kühlleitungen 15 können alternativ auch integriert ausgebildet sein.

Auf der Oberfläche 46 des Werkzeugs 40 ist ein wärmeerzeugendes Element 22, beispielsweise eine Metallfolie oder ein Metallblech angeordnet, auf welchem wiederum das Objekt 44 liegt. Die Heizmatte 10 ist mit ihrer Unterseite 28 an dem Objekt 44 angeordnet und schließt an dem Außenrand 48 mit dem Werkzeug 40 ab.

Das Heizelement 12 ist als Induktionsheizung ausgebildet. Die Heizdrähte 13 des induktiven Heizelements 12, welche beispielsweise spulenförmig in der Heizmatte 10 angeordnet sein können, erzeugen durch Induktion in dem wärmeerzeugenden Element 22 Wärme, welches auf diese Weise wiederum das Objekt 44 aufheizt. Auf diese Weise kann das Objekt 44, beispielsweise ein Laminat 42, umgeformt werden, indem sich das Laminat 42 der Form des Werkzeugs 42 anpasst.

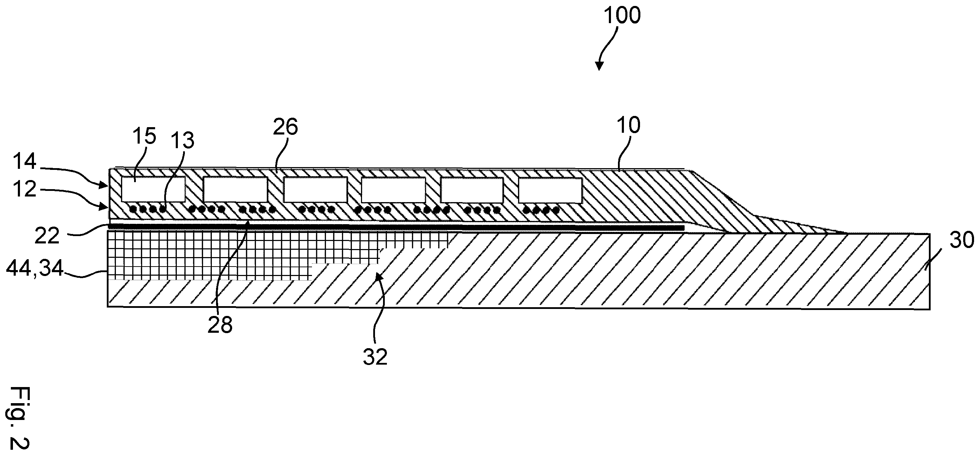

Figur 2 zeigt einen Querschnitt durch eine Werkzeugvorrichtung 100 an einem in einem Reparaturbereich 32 eines Werkstücks 30 angeordneten Reparaturstück 34 als Objekt 44 nach einem weiteren Ausführungsbeispiel der Erfindung.

Die Heizmatte 10 entspricht der in Figur 1 dargestellten Ausführungsform und wird zur Vermeidung unnötiger Wiederholungen nicht weiter beschrieben.

Das Reparaturstück 34 ist in den Reparaturbereich 32 des Werkstücks 30 eingelegt. Das wärmeerzeugende Element 22 für das induktive Heizelement 12 ist an einer dem Heizelement 12 benachbarten Seite 28 der Heizmatte 10 direkt über dem Objekt 44 angeordnet und damit zur Erwärmung des dem wärmeerzeugenden Element 22 benachbart angeordneten Objekts 44 vorgesehen. Das wärmeerzeugende Element 22 deckt auch noch einen Bereich des Werkstücks 30 neben dem Reparaturbereich 32 ab, sodass dieser Bereich auch aufgeheizt werden kann. Damit kann eine möglichst gute Vernetzung des Reparaturstücks 34 mit dem Werkstück 30 erreicht werden.

Bei dem Reparaturverfahren für das Werkstück 30 aus einem Kunststoffmaterial, wird die Werkzeugvorrichtung 100, welche die Heizmatte 10 mit dem Heizelement 12 umfasst, mit dem das Reparaturstück 34 erwärmt wird, an einem Reparaturbereich 32 des Werkstücks 30 positioniert. Dabei wird zwischen Reparaturbereich 32 und Werkzeugvorrichtung 100 das Reparaturstück 34 positioniert. Während des Erwärmens des Objekts 44 wird die Heizmatte 10 wenigstens zeitweise aktiv gekühlt.

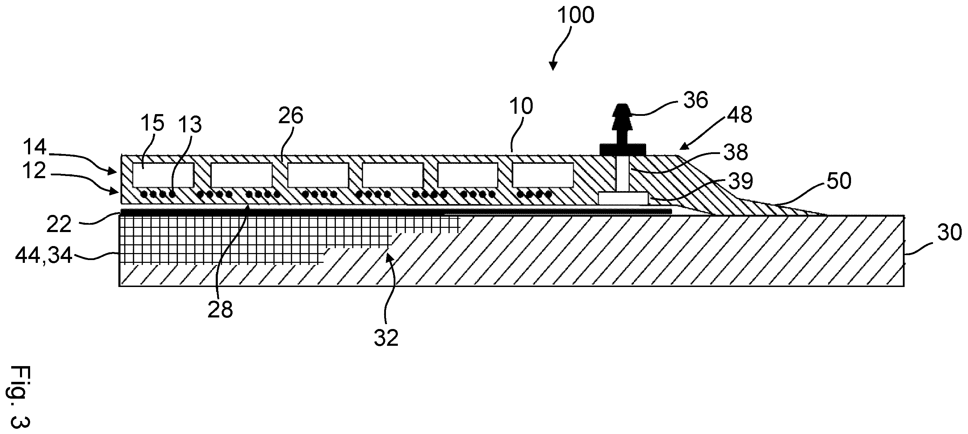

**In** Figur 3 ist ein Querschnitt durch eine Werkzeugvorrichtung 100 mit einem Vakuumkanal 39 an einem in einem Reparaturbereich 32 eines Werkstücks 30 angeordneten Reparaturstück 34 nach einem weiteren Ausführungsbeispiel der Erfindung dargestellt.

Die Ausführungsform der in Figur 3 dargestellten Werkzeugvorrichtung 100 entspricht im Wesentlichen der in Figur 2 dargestellten Ausführungsform. Der Unterschied besteht darin, dass die Werkzeugvorrichtung 100 in Figur 3 einen Vakuumkanal 39 aufweist, mit dem die Werkzeugvorrichtung 100 auf einem Werkstück 40 fixierbar ist. Der Vakuumkanal 39 ist dabei umlaufend an einem Außenrand 48 des Heizelements 10 ausgebildet. Der Vakuumkanal 39 ist über einen Anschlusskanal 38 mit dem Vakuumanschluss 36 verbunden und über diesen evakuierbar.

Die Werkzeugvorrichtung 100 kann so auf das Werkstück 30 aufgelegt und anschließend der Vakuumkanal 39 evakuiert werden. Dadurch saugt sich die flexible Werkzeugvorrichtung 100, welche beispielsweise aus einer Silikon-Heizmatte 10 bestehen kann, an das Werkstück 30 an. Dadurch kann der effektive Abstand zwischen Werkzeugvorrichtung 100 und Werkstück 30 minimiert werden, wodurch die Wärme besonders effektiv in das Werkstück 30 und das Reparaturstück 34 eingekoppelt werden kann.

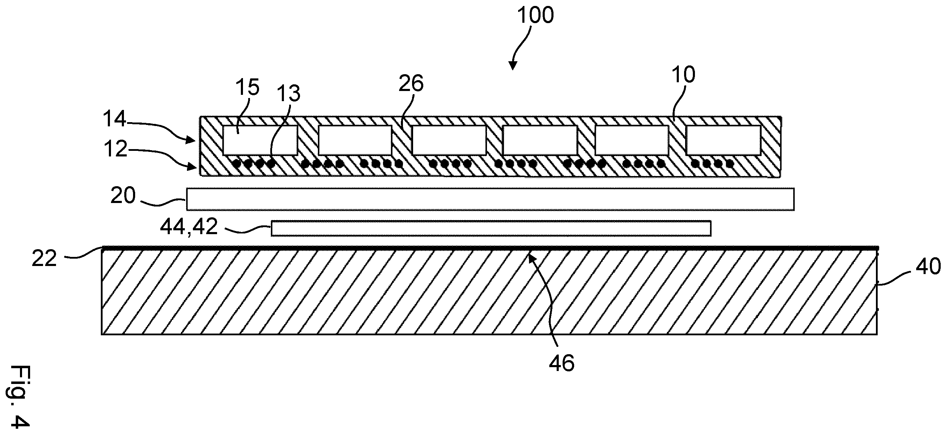

Figur 4 zeigt einen Querschnitt durch eine Werkzeugvorrichtung 100 mit einem Isolierelement 20 an einem an einem Werkzeug 40 angelegten Objekt 44 nach einem weiteren Ausführungsbeispiel der Erfindung.

Die Werkzeugvorrichtung 100 entspricht der in den Figuren 1 und 2 dargestellten Ausführungsform mit einem induktiven Heizelement 12 mit Heizdrähten 13 sowie einem integrierten Kühlelement 14 mit Kühlleitungen 15.

Das Werkzeug 40 weist ein auf der Oberfläche 46 angeordnetes wärmeerzeugendes Element 22 auf, welches wenigstens bereichsweise an der Oberfläche 46 des Werkzeugs 40 als Metallfolie ausgebildet ist. Beispielsweise kann das wärmeerzeugende Element 24 wenigstens bereichsweise auf die Oberfläche 46 des Werkzeugs 40 mittels eines Beschichtungsverfahrens aufgebracht sein.

So ist das wärmeerzeugende Element 22 auf einer der Heizmatte 10 abgewandten Seite des Objekts 44 angeordnet. Das wärmeerzeugende Element 22 wird durch das Heizelement 12 induktiv erwärmt und das Objekt 44 wiederum über das wärmeerzeugende Element 22 erwärmt.

Das zu erwärmende Objekt 44, beispielsweise ein Laminat 42, ist auf das Werkzeug 40 mit dem wärmeerzeugenden Element 22 aufgelegt und kann sich so nach Erwärmung der Oberflächengestalt des Werkzeugs 40 anpassen.

Ein Isolierelement 20 ist zwischen Heizmatte 10 und dem zu erwärmenden Objekt 44 angeordnet, welches der thermischen Dämmung der Heizmatte 10 vor dem aufgeheizten Objekt 44 dient.

Das Isolierelement 20 liegt flächig an der Heizmatte 10 an. Das Isolierelement 20 kann beispielsweise aus einem Kunststoffmaterial, insbesondere aus einem Silikonmaterial, gebildet sein. Alternativ kann das Isolierelement 20 auch mit dem Strukturmaterial der Heizmatte 10 stoffschlüssig und/oder einstückig verbunden sein.

Bei dem Herstellverfahren für das Objekt 44 aus einem Kunststoffmaterial, wird die Werkzeugvorrichtung 100, welche die Heizmatte 10 mit dem Heizelement 12 umfasst, mit dem das Laminat 42 erwärmt wird, an dem Werkzeug 40 positioniert. Dabei wird zwischen Werkzeug 40 und Werkzeugvorrichtung 100 das Objekt 44 positioniert. Während des Erwärmens des Objekts 44 wird die Heizmatte 10 wenigstens zeitweise aktiv gekühlt.

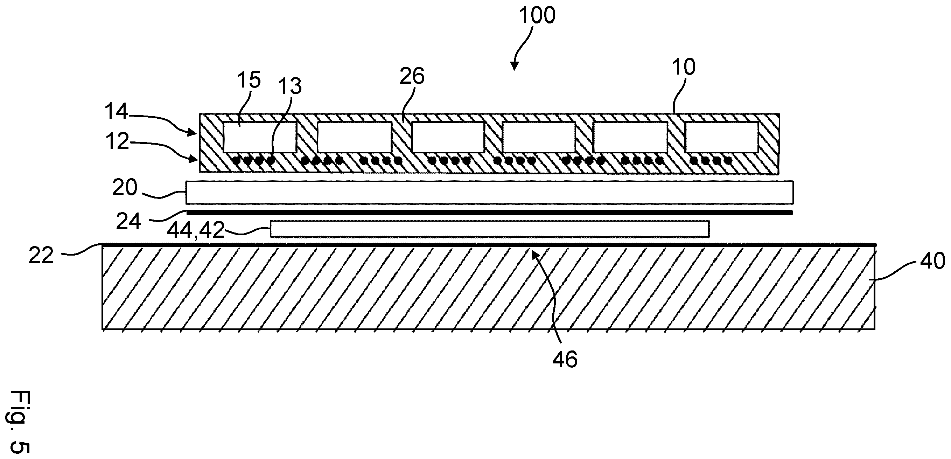

In Figur 5 ist dazu ein weiteres Ausführungsbeispiel der Erfindung dargestellt, bei dem im Unterschied zu dem in Figur 4 dargestellten Ausführungsbeispiel ein weiteres wärmeerzeugendes Element 44 in Form einer Metallfolie oder eines Metallblechs zwischen dem zu erwärmenden Objekt 44 und dem Isolierelement 20 angeordnet ist. Das weitere wärmeerzeugende Element 22 dient dabei der beidseitigen Erwärmung des Objekts 44. Somit kann beispielsweise ein homogeneres Aufheizen des Objekts 44 mit geringeren Verzügen erreicht werden.

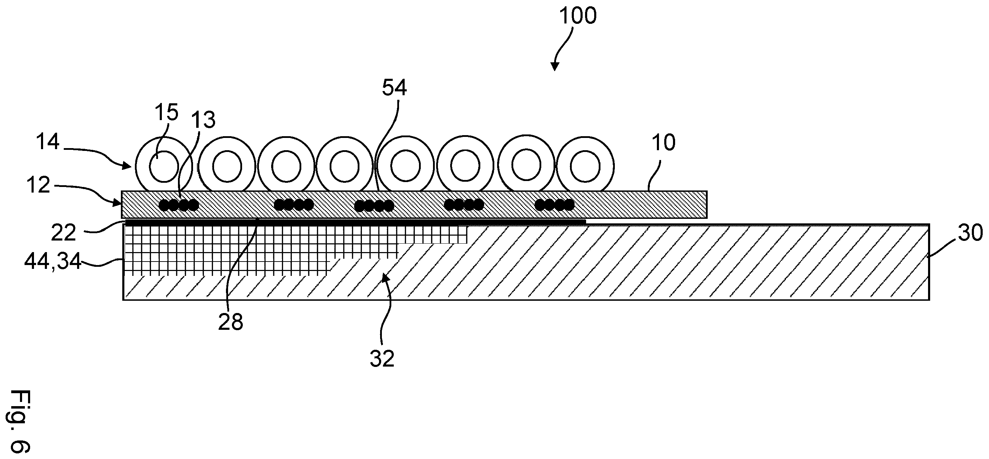

Figur 6 zeigt einen Querschnitt durch eine Werkzeugvorrichtung 100 mit auf einer Oberfläche 54 angebrachten Kühlleitungen 15 an einem in einem Reparaturbereich 32 eines Werkstücks 30 angeordneten Reparaturstück 34 nach einem weiteren Ausführungsbeispiel der Erfindung.

Die Kühlleitungen 15 sind auf einer dem Heizelement 12 abgewandten Oberfläche 54 der Heizmatte 10 befestigt und können insbesondere aufgeklebt oder aufgenäht sein. Alternativ ist auch möglich, die Kühlleitungen 15 durch einen geeigneten Fertigungsprozess der Heizmatte 10 als integraler Bestandteil mit der Heizmatte 10 herzustellen.

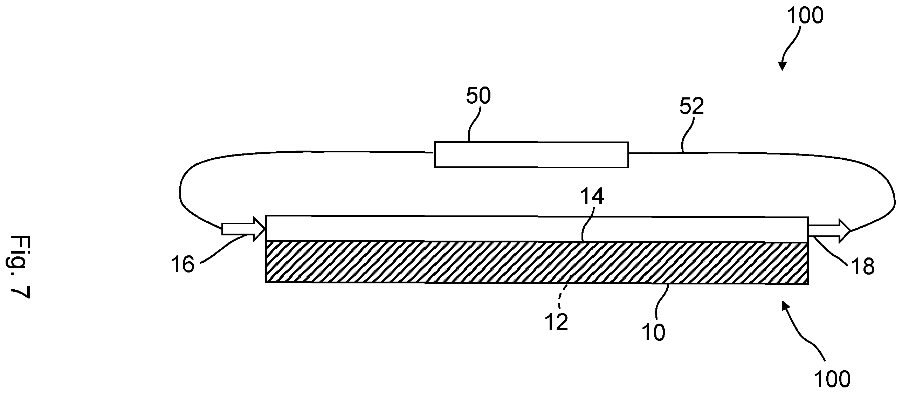

In Figur 7 ist eine schematische Darstellung einer Werkzeugvorrichtung 100 mit einem geschlossenen Kühlkreislauf 52 nach einem weiteren Ausführungsbeispiel der Erfindung zu sehen.

Die Werkzeugvorrichtung 100 weist einen geschlossenen Kühlkreislauf 52 von einem Auslass 18 des Kühlelements 14 über einen Wärmetauscher 50 zu einem Einlass 16 des Kühlelements 14 auf.

Über Schläuche kann beispielsweise dem Kühlelement 12 Kaltluft zugeführt und Warmluft abgeführt werden. In einem Kreislauf 52 wird die warme Luft über den Wärmetauscher 50 wieder abgekühlt und kann wieder in die Schläuche eingebracht werden, sodass die kalte Luft wieder dem Kühlelement 12 zugeführt werden kann. Mittels einer solchen autonomen Werkzeuganordnung 100 können Reparaturen an einem Werkstück 30 vor Ort durchgeführt werden. Die Werkzeugvorrichtung 100 ist dadurch unabhängig von einer eventuell nicht vorhandenen Versorgung mit einem Kühlmedium. Dadurch wird die Flexibilität einer solchen Werkzeugvorrichtung 100 entscheidend erhöht.

Eine Kühlung der Heizmatte 10 kann dabei vorteilhaft über eine geregelte Kühlfunktion, insbesondere als variothermer Prozess, erfolgen, um möglichst günstige Bedingungen für ein Reparaturverfahren eines Werkstücks 30 oder für ein Herstellverfahren eines Objekts 44 einzuhalten.
- 10: Heizmatte
- 12: Heizelement
- 13: Heizdrähte
- 14: Kühlelement
- 15: Kühlleitung
- 16: Einlass
- 18: Auslass
- 20: Isolierelement
- 22: wärmeerzeugendes Element
- 24: wärmeerzeugendes Element
- 26: Bereich
- 28: Seite
- 30: Werkstück
- 32: Reparaturbereich
- 34: Reparaturstück
- 36: Vakuumanschluss
- 38: Anschlusskanal
- 39: Vakuumkanal
- 40: Werkzeug
- 42: Laminat
- 44: Objekt
- 46: Oberfläche Werkzeug
- 48: Außenrand
- 50: Dichtlippe
- 52: Zwischenraum
- 54: Oberfläche Heizmatte

- 60: Wärmetauscher
- 62: Kühlkreislauf
- 100: Werkzeugvorrichtung

## Patentansprüche

1. Werkzeugvorrichtung (100), insbesondere portable Werkzeugvorrichtung, umfassend wenigstens eine flexible Heizmatte (10), welche wenigstens ein induktives Heizelement (12) mit wenigstens einem Kühlelement (14), das wenigstens eine Kühlleitung (15) aufweist, welches zur Erwärmung eines Objekts (44), insbesondere eines Laminats (42) und/oder eines Reparaturstücks (34), vorgesehen ist,
wobei die wenigstens eine Kühlleitung (15) wenigstens einen flexiblen Schlauch aufweist und wenigstens bereichsweise jeweils in Zwischenräumen (52) zwischen Heizdrähten (13) des Heizelements (12) angeordnet ist,
**dadurch gekennzeichnet, dass** die Werkzeugvorrichtung (100) ein Isolierelement (20) umfasst, das eine Dicke von wenigstens 5 mm aufweist,
wobei das Isolierelement (20) flächig an der Heizmatte (10) anliegt und mit dem Strukturmaterial der Heizmatte (10) stoffschlüssig und/oder einstückig verbunden ist,
wobei
bei Verwendung zum Erwärmen des zu erwärmenden Objekts (42, 44) zwischen dem zu erwärmenden Objekt (42, 44) und der Heizmatte (10) das Isolierelement (20),
ein wärmeerzeugendes Element (24) an einer dem Heizelement (12) benachbarten Seite der Heizmatte (10) angeordnet ist, ein wärmeerzeugendes Element (22) auf einer der Heizmatte (10) abgewandten Seite des Objekts (42, 44) angeordnet ist, und
die wärmeerzeugenden Elemente (22, 24) durch das Heizelement (12) induktiv erwärmt werden und das Objekt (44) über die wärmeerzeugenden Elemente (22, 24) erwärmt wird.

2. Werkzeugvorrichtung nach Anspruch 1,
**dadurch gekennzeichnet, dass** die wenigstens eine Kühlleitung (15) wenigstens bereichsweise über der Heizmatte (10) und/oder wenigstens bereichsweise direkt mit der Heizmatte (10) verbunden und/oder wenigstens bereichsweise in die Heizmatte (10) integriert angeordnet ist.

3. Werkzeugvorrichtung nach einem der vorhergehenden Ansprüche,
**dadurch gekennzeichnet, dass** zur Erwärmung des Objekts (44) wenigstens ein wärmeerzeugendes Element (22, 24), insbesondere ein elektrisch leitfähiges Material, vorgesehen ist, welches an einer dem Heizelement (12) benachbarten Seite (28) der Heizmatte (10) angeordnet ist.

4. Werkzeugvorrichtung nach einem der vorhergehenden Ansprüche,
**dadurch gekennzeichnet, dass** das Kühlelement (14) in einem von dem zu erwärmenden Objekt (44) abgewandten Bereich (26) der Heizmatte (10) angeordnet ist.

5. Werkzeugvorrichtung nach einem der vorhergehenden Ansprüche,
**dadurch gekennzeichnet, dass** Heizdrähte (13) des Heizelements (12) und eine oder mehrere Kühlleitungen (15) des Kühlelements (14) wenigstens bereichsweise nebeneinander in einer flächigen Ausdehnung der Heizmatte (10) angeordnet sind, und/oder
dass eine oder mehrere Kühlleitungen (15) in einem Herstellungsprozess, insbesondere einem Gießprozess, der Heizmatte (10) integriert hergestellt sind, und/oder
dass eine oder mehrere Kühlleitungen (15) auf einer dem Heizelement (12) abgewandten Oberfläche (54) der Heizmatte (10) befestigt, insbesondere aufgeklebt oder aufgenäht sind.

6. Werkzeugvorrichtung nach Anspruch 5, **dadurch gekennzeichnet, dass** die Heizdrähte (13) und die wenigstens eine Kühlleitung (15) integriert als Leitungsverbund ausgebildet sind.

7. Werkzeugvorrichtung nach einem der vorhergehenden Ansprüche, **dadurch gekennzeichnet, dass** das wärmeerzeugende Element (22, 24) als elektrisch leitfähiges Material, insbesondere als Metallfolie oder Metallblech, ausgebildet ist.

8. Werkzeugvorrichtung nach einem der vorhergehenden Ansprüche, **dadurch gekennzeichnet, dass** das Heizelement (12) von einem Strukturmaterial der Heizmatte (10) und/oder des Isolierelements (20) umgeben ist.

9. Werkzeugvorrichtung nach einem der vorhergehenden Ansprüche, **dadurch gekennzeichnet, dass** die Werkzeugvorrichtung (100) einen Vakuumkanal (39) aufweist, mit dem die Werkzeugvorrichtung (100) auf einem Werkstück (40) fixierbar ist, insbesondere wobei der Vakuumkanal (39) umlaufend an einem Außenrand (48) des Heizelements (10) ausgebildet ist.

10. Werkzeugvorrichtung nach einem der vorhergehenden Ansprüche, **dadurch gekennzeichnet, dass** die Werkzeugvorrichtung (100) einen geschlossenen Kühlkreislauf (62) von einem Auslass (18) des Kühlelements (14) über einen Wärmetauscher (50) zu einem Einlass (16) des Kühlelements (14) aufweist.

11. Reparaturverfahren für ein Werkstück (30) aus einem Kunststoffmaterial, wobei eine Werkzeugvorrichtung (100) nach einem der vorhergehenden Ansprüche, umfassend wenigstens eine flexible Heizmatte (10), welche wenigstens ein induktives Heizelement (12) umfasst, mit dem ein Objekt (44), insbesondere ein Laminat (42) und/oder ein Reparaturstück (34), erwärmt wird, an einem Reparaturbereich (32) des Werkstücks (30) positioniert wird, wobei zwischen Reparaturbereich (32) und Werkzeugvorrichtung (100) das Reparaturstück (34) positioniert wird, wobei während des Erwärmens des Objekts (44) die Heizmatte (10) wenigstens zeitweise aktiv gekühlt wird,
**dadurch gekennzeichnet, dass**
zwischen dem zu erwärmenden Objekt (42, 44) und der Heizmatte (10) ein Isolierelement (20), das eine Dicke von wenigstens 5 mm aufweist, und ein wärmeerzeugendes Element (24) an einer dem Heizelement (12) benachbarten Seite der Heizmatte (10) angeordnet werden und dass ein wärmeerzeugendes Element (22) auf einer der Heizmatte (10) abgewandten Seite des Objekts (42, 44) angeordnet wird, und wobei das Isolierelement (20) flächig an der Heizmatte (10) angelegt ist
und mit dem Strukturmaterial der Heizmatte (10) stoffschlüssig und/oder einstückig verbunden ist,
wobei die wärmeerzeugenden Elemente (22, 24) durch das Heizelement (12) induktiv erwärmt werden und das Objekt (44) über die wärmeerzeugenden Elemente (22, 24) erwärmt wird.

12. Herstellverfahren für ein Objekt (44) aus einem Kunststoffmaterial,
wobei eine Werkzeugvorrichtung (100) nach einem der Ansprüche 1 bis 10, umfassend wenigstens eine flexible Heizmatte (10), welche wenigstens ein induktives Heizelement (12) umfasst, mit dem ein Objekt (44), insbesondere ein Laminat (42) und/oder ein Reparaturstück (34), erwärmt wird, an einem Werkzeug (40) positioniert wird, wobei zwischen Werkzeug (40) und Werkzeugvorrichtung (100) das Objekt (44) positioniert wird,
wobei während des Erwärmens des Objekts (44) die Heizmatte (10) wenigstens zeitweise aktiv gekühlt wird,
**dadurch gekennzeichnet, dass**
zwischen dem zu erwärmenden Objekt (42, 44) und der Heizmatte (10) ein Isolierelement (20) das eine Dicke von wenigstens 5 mm aufweist,
und ein wärmeerzeugendes Element (24) an einer dem Heizelement (12) benachbarten Seite der Heizmatte (10) angeordnet werden und dass ein wärmeerzeugendes Element (22) auf einer der Heizmatte (10) abgewandten Seite des Objekts (42, 44) angeordnet wird, und
wobei das Isolierelement (20) flächig an der Heizmatte (10) angelegt und mit dem Strukturmaterial der Heizmatte (10) stoffschlüssig und/oder einstückig verbunden ist,
wobei die wärmeerzeugenden Elemente (22, 24) durch das Heizelement (12) induktiv erwärmt werden und das Objekt (44) über die wärmeerzeugenden Elemente (22, 24) erwärmt wird.

13. Verfahren nach Anspruch 12, **dadurch gekennzeichnet, dass** das wärmeerzeugende Element (22) wenigstens bereichsweise an der Oberfläche (46) des Werkzeugs (40) als metallische Schicht, insbesondere eine Metallfolie oder ein Metallblech ausgebildet ist, und/oder wobei das wärmeerzeugende Element (22) wenigstens bereichsweise auf die Oberfläche (46) des Werkzeugs (40) mittels eines Beschichtungsverfahrens, insbesondere mittels Galvanisierung, aufgebracht wird.

14. Verfahren nach einem der Ansprüche 11 bis 13, **dadurch gekennzeichnet, dass** eine Kühlung der Heizmatte (10) über eine geregelte Kühlfunktion, insbesondere als variothermer Prozess, erfolgt.

15. Verwendung einer Werkzeugvorrichtung (100) nach einem der Ansprüche 1 bis 10 für ein Reparaturverfahren für ein Werkstück (30) aus einem Kunststoffmaterial nach einem der Ansprüche 11 oder 14 abhängig von 11.

16. Verwendung einer Werkzeugvorrichtung (100) nach einem der Ansprüche 1 bis 10 für ein Herstellverfahren für ein Objekt (44) aus einem Kunststoffmaterial nach einem der Ansprüche 12, 13 oder 14 abhängig von 12 oder 13.

## Claims

1. Tool device (100), in particular portable tool device, comprising at least one flexible heating mat (10), which has at least one inductive heating element (12) with at least one cooling element (14) having at least one cooling line (15), which heating element is provided for heating an object (44), in particular a laminate (42) and/or a repair piece (34),
wherein the at least one cooling line (15) has at least one flexible hose and, at least regionally, is arranged in each case in intermediate spaces (52) between heating wires (13) of the heating element (12),
**characterized in that** the tool device (100) comprises an insulating element (20) which has a thickness of at least 5 mm,
wherein the insulating element (20) bears areally against the heating mat (10) and is connected in a materially bonded manner and/or in one piece to the structure material of the heating mat (10),
wherein,
during a use for heating the object to be heated (42, 44), between the object to be heated (42, 44) and the heating mat (10), the insulating element (20),
a heat-generating element (24) is arranged on a side of the heating mat (10) that is adjacent to the heating element (12), a heat-generating element (22) is arranged on a side of the object (42, 44) that is directed away from the heating mat (10), and
the heat-generating elements (22, 24) are heated inductively by the heating element (12) and the object (44) is heated via the heat-generating elements (22, 24).

2. Tool device according to claim 1, **characterized in that** the at least one cooling line (15) is arranged so as to be at least regionally above the heating mat (10) and/or at least regionally connected directly to the heating mat (10) and/or at least regionally integrated into the heating mat (10).

3. Tool device according to one of the preceding claims, **characterized in that**, for heating of the object (44), provision is made of at least one heat-generating element (22, 24), in particular an electrically conductive material, which is arranged on a side (28) of the heating mat (10) that is adjacent to the heating element (12).

4. Tool device according to one of the preceding claims, **characterized in that** the cooling element (14) is arranged in a region (26) of the heating mat (10) that is directed away from the object to be heated (44).

5. Tool device according to one of the preceding claims, **characterized in that** heating wires (13) of the heating element (12) and one or more cooling lines (15) of the cooling element (14) are at least regionally arranged side by side in an areal extent of the heating mat (10), and/or
**in that** one or more cooling lines (15) are produced in an integrated manner in a production process, in particular a casting process, of the heating mat (10), and/or
**in that** one or more cooling lines (15) are fastened, in particular adhesively bonded to or stitched, to a surface (54) of the heating mat (10) that is directed away from the heating element (12).

6. Tool device according to Claim 5, **characterized in that** the heating wires (13) and the at least one cooling line (15) are configured so as to be integrated in the form of a line assembly.

7. Tool device according to one of the preceding claims, **characterized in that** the heat-generating element (22, 24) is in the form of an electrically conductive material, in particular in the form of a metal foil or metal sheet.

8. Tool device according to one of the preceding claims, **characterized in that** the heating element (12) is surrounded by a structure material of the heating mat (10) and/or of the insulating element (20).

9. Tool device according to one of the preceding claims, **characterized in that** the tool device (100) has a vacuum channel (39) by way of which the tool device (100) is fixable to a workpiece (40), in particular wherein the vacuum channel (39) is formed in a running-around manner at an outer edge (48) of the heating element (10).

10. Tool device according to one of the preceding claims, **characterized in that** the tool device (100) has a closed cooling circuit (62) from an outlet (18) of the cooling element (14) to an inlet (16) of the cooling element (14) via a heat exchanger (50).

11. Repair method for a workpiece (30) composed of a plastic material, wherein a tool device (100) according to one of the preceding claims, comprising at least one flexible heating mat (10), which comprises at least one inductive heating element (12) by way of which an object (44), in particular a laminate (42) and/or a repair piece (34), is heated, is positioned on a repair region (32) of the workpiece (30), wherein the repair piece (34) is positioned between the repair region (32) and the tool device (100), wherein the heating mat (10) is at least temporarily actively cooled during the heating of the object (44),
**characterized in that**,
between the object to be heated (42, 44) and the heating mat (10), an insulating element (20), having a thickness of at least 5 mm, and a heat-generating element (24) are arranged on a side of the heating mat (10) that is adjacent to the heating element (12), and **in that** a heat-generating element (22) is arranged on a side of the object (42, 44) that is directed away from the heating mat (10), and wherein the insulating element (20) is caused to bear areally against the heating mat (10) and is connected in a materially bonded manner and/or in one piece to the structure material of the heating mat (10), wherein the heat-generating elements (22, 24) are heated inductively by the heating element (12) and the object (44) is heated via the heat-generating elements (22, 24).

12. Production method for an object (44) composed of a plastic material, wherein a tool device (100) according to one of Claims 1 to 10, comprising at least one flexible heating mat (10), which comprises at least one inductive heating element (12) by way of which an object (44), in particular a laminate (42) and/or a repair piece (34), is heated, is positioned on a tool (40), wherein the object (44) is positioned between the tool (40) and the tool device (100),
wherein the heating mat (10) is at least temporarily actively cooled during the heating of the object (44), **characterized in that**,
between the object to be heated (42, 44) and the heating mat (10), an insulating element (20), having a thickness of at least 5 mm, and a heat-generating element (24) are arranged on a side of the heating mat (10) that is adjacent to the heating element (12), and **in that** a heat-generating element (22) is arranged on a side of the object (42, 44) that is directed away from the heating mat (10), and
wherein the insulating element (20) is caused to bear areally against the heating mat (10) and is connected in a materially bonded manner and/or in one piece to the structure material of the heating mat (10),
wherein the heat-generating elements (22, 24) are heated inductively by the heating element (12) and the object (44) is heated via the heat-generating elements (22, 24).

13. Method according to Claim 12, **characterized in that**, at least regionally on the surface (46) of the tool (40), the heat-generating element (22) is in the form of a metallic layer, in particular a metal foil or a metal sheet, and/or wherein, at least regionally on the surface (46) of the tool (40), the heat-generating element (22) is applied by means of a coating process, in particular by means of electroplating.

14. Method according to one of Claims 11 to 13, **characterized in that** the heating mat (10) is cooled via a regulated cooling function, in particular in the form of a variothermal process.

15. Use of a tool device (100) according to one of Claims 1 to 10 for a repair method for a workpiece (30) composed of a plastic material according to one of Claims 11 or 14 depending on 11.

16. Use of a tool device (100) according to one of Claims 1 to 10 for a production method for an object (44) composed of a plastic material according to one of Claims 12, 13 or 14 depending on 12 or 13.

## Revendications

1. Dispositif d'outil (100), notamment dispositif d'outil portable, comprenant au moins un tapis chauffant flexible (10) qui présente au moins un élément chauffant inductif (12) avec au moins un élément de refroidissement (14), qui présente au moins un conduit de refroidissement (15), qui est prévu pour chauffer un objet (44), notamment un stratifié (42) et/ou une pièce de réparation (34),
l'au moins un conduit de refroidissement (15) présentant au moins un tuyau flexible et étant agencé au moins par zones dans des espaces intermédiaires (52) entre les fils chauffants (13) de l'élément chauffant (12),
**caractérisé en ce que** le dispositif d'outil (100) comprend un élément isolant (20) qui présente une épaisseur d'au moins 5 mm,
l'élément isolant (20) s'appliquant à plat contre le tapis chauffant (10) et étant relié au matériau structurel du tapis chauffant (10) par liaison de matière et/ou d'un seul tenant,
dans lequel
lors de l'utilisation pour chauffer l'objet à chauffer (42, 44), entre l'objet à chauffer (42, 44) et le tapis chauffant (10), l'élément isolant (20),
un élément générateur de chaleur (24) est agencé sur un côté du tapis chauffant (10) voisin de l'élément chauffant (12), un élément générateur de chaleur (22) est agencé sur un côté de l'objet (42, 44) détourné du tapis chauffant (10), et
les éléments générateurs de chaleur (22, 24) sont chauffés par induction par l'élément chauffant (12) et l'objet (44) est chauffé par les éléments générateurs de chaleur (22, 24).

2. Dispositif d'outil selon la revendication 1, **caractérisé en ce que** l'au moins un conduit de refroidissement (15) est relié au moins par zones par l'intermédiaire du tapis chauffant (10) et/ou au moins par zones directement au tapis chauffant (10) et/ou est agencé en étant intégré au moins par zones dans le tapis chauffant (10).

3. Dispositif d'outil selon l'une quelconque des revendications précédentes, **caractérisé en ce qu'**au moins un élément générateur de chaleur (22, 24), notamment un matériau électriquement conducteur, est prévu pour chauffer l'objet (44), lequel élément est agencé sur un côté (28) du tapis chauffant (10) voisin de l'élément chauffant (12).

4. Dispositif d'outil selon l'une quelconque des revendications précédentes, **caractérisé en ce que** l'élément de refroidissement (14) est agencé dans une zone (26) du tapis chauffant (10) détournée de l'objet (44) à chauffer.

5. Dispositif d'outil selon l'une quelconque des revendications précédentes, **caractérisé en ce que** les fils chauffants (13) de l'élément chauffant (12) et un ou plusieurs conduits de refroidissement (15) de l'élément de refroidissement (14) sont agencés au moins par zones les uns à côté des autres dans une extension plane du tapis chauffant (10), et/ou
**en ce qu'**un ou plusieurs conduits de refroidissement (15) sont fabriqués en étant intégrés dans le tapis chauffant (10) au cours d'un processus de fabrication, notamment d'un processus de coulée, et/ou
**en ce qu'**un ou plusieurs conduits de refroidissement (15) sont fixés, notamment collés ou cousus, sur une surface (54) du tapis chauffant (10) détournée de l'élément chauffant (12).

6. Dispositif d'outil selon la revendication 5, **caractérisé en ce que** les fils chauffants (13) et au moins un conduit de refroidissement (15) sont réalisés de manière intégrée sous forme d'ensemble de conduits.

7. Dispositif d'outil selon l'une quelconque des revendications précédentes, **caractérisé en ce que** l'élément générateur de chaleur (22, 24) est réalisé sous forme de matériau électriquement conducteur, notamment sous forme de feuille métallique ou de tôle métallique.

8. Dispositif d'outil selon l'une quelconque des revendications précédentes, **caractérisé en ce que** l'élément chauffant (12) est entouré d'un matériau structurel du tapis chauffant (10) et/ou de l'élément isolant (20).

9. Dispositif d'outil selon l'une quelconque des revendications précédentes, **caractérisé en ce que** le dispositif d'outil (100) présente un canal à vide (39) avec lequel le dispositif d'outil (100) peut être fixé sur une pièce (40), le canal à vide (39) étant notamment formé sur tout le pourtour d'un bord extérieur (48) de l'élément chauffant (10).

10. Dispositif d'outil selon l'une quelconque des revendications précédentes, **caractérisé en ce que** le dispositif d'outil (100) présente un circuit de refroidissement fermé (62) allant d'une sortie (18) de l'élément de refroidissement (14) à une entrée (16) de l'élément de refroidissement (14) par l'intermédiaire d'un échangeur de chaleur (50).

11. Procédé de réparation d'une pièce (30) en une matière plastique, dans lequel un dispositif d'outil (100) selon l'une quelconque des revendications précédentes, comprenant au moins un tapis chauffant flexible (10) qui comprend au moins un élément chauffant inductif (12) avec lequel un objet (44), notamment un stratifié (42) et/ou une pièce de réparation (34), est chauffé, est positionné sur une zone de réparation (32) de la pièce (30), la pièce de réparation (34) étant positionnée entre la zone de réparation (32) et le dispositif d'outil (100), le tapis chauffant (10) étant refroidi activement au moins temporairement pendant le chauffage de l'objet (44),
**caractérisé en ce que**
entre l'objet à chauffer (42, 44) et le tapis chauffant (10), un élément isolant (20) présentant une épaisseur d'au moins 5 mm et un élément générateur de chaleur (24) sont agencés sur un côté du tapis chauffant (10) voisin de l'élément chauffant (12), et **en ce qu'**un élément générateur de chaleur (22) est agencé sur un côté de l'objet détourné du tapis chauffant (10) (42, 44), et l'élément isolant (20) étant appliqué à plat sur le tapis chauffant (10) et relié par liaison de matière et/ou d'un seul tenant au matériau structurel du tapis chauffant (10),
les éléments générateurs de chaleur (22, 24) étant chauffés par induction par l'élément chauffant (12) et l'objet (44) étant chauffé par les éléments générateurs de chaleur (22, 24).

12. Procédé de fabrication d'un objet (44) en une matière plastique, dans lequel un dispositif d'outil (100) selon l'une quelconque des revendications 1 à 10, comprenant au moins un tapis chauffant flexible (10) qui comprend au moins un élément chauffant inductif (12) avec lequel un objet (44), notamment un stratifié (42) et/ou une pièce de réparation (34), est chauffé, est positionné sur un outil (40), l'objet (44) étant positionné entre l'outil (40) et le dispositif d'outil (100),
le tapis chauffant (10) étant refroidi activement au moins temporairement pendant le chauffage de l'objet (44),
**caractérisé en ce que**
entre l'objet à chauffer (42, 44) et le tapis chauffant (10), un élément isolant (20) présentant une épaisseur d'au moins 5 mm et un élément générateur de chaleur (24) sont agencés sur un côté du tapis chauffant (10) voisin de l'élément chauffant (12), et **en ce qu'**un élément générateur de chaleur (22) est agencé sur un côté de l'objet détourné du tapis chauffant (10) (42, 44), et l'élément isolant (20) s'appliquant à plat contre le tapis chauffant (10) et étant relié au matériau structurel du tapis chauffant (10) par liaison de matière et/ou d'un seul tenant,
les éléments générateurs de chaleur (22, 24) étant chauffés par induction par l'élément chauffant (12) et l'objet (44) étant chauffé par les éléments générateurs de chaleur (22, 24).

13. Procédé selon la revendication 12, **caractérisé en ce que** l'élément générateur de chaleur (22) est réalisé au moins par zones sur la surface (46) de l'outil (40) sous forme de couche métallique, notamment de feuille métallique ou de tôle métallique, et/ou dans lequel l'élément générateur de chaleur (22) est appliqué au moins par zones sur la surface (46) de l'outil (40) au moyen d'un procédé de revêtement, notamment au moyen d'une galvanisation.

14. Procédé selon l'une quelconque des revendications 11 à 13, **caractérisé en ce que** le refroidissement du tapis chauffant (10) s'effectue par l'intermédiaire d'une fonction de refroidissement régulée, notamment sous forme de processus variothermique.

15. Utilisation d'un dispositif d'outil (100) selon l'une quelconque des revendications 1 à 10 pour un procédé de réparation d'une pièce (30) en une matière plastique selon l'une quelconque des revendications 11 ou 14 selon 11.

16. Utilisation d'un dispositif d'outil (100) selon l'une quelconque des revendications 1 à 10 pour un procédé de fabrication d'un objet (44) en une matière plastique selon l'une quelconque des revendications 12, 13 ou 14 selon 12 ou 13.
